(19) Europäisches Patentamt
European Patent Office
Office européen des brevets

(11) Veröffentlichungsnummer : **0 336 108 B1**

# (12) EUROPÄISCHE PATENTSCHRIFT

(45) Veröffentlichungstag der Patentschrift : **03.06.92 Patentblatt 92/23**

(21) Anmeldenummer : **89103539.6**

(22) Anmeldetag : **01.03.89**

(51) Int. Cl.$^5$ : **C07C 69/96,** C07C 68/02, C08G 63/64, C08G 71/04, C09K 19/20, C09K 19/22, C08G 73/06

## (54) Flüssig-kristalline Bischlorkohlensäureester, Verfahren zu ihrer Herstellung und aus ihnen hergestellte flüssigkristallineN-Alkyl-Polyurethane.

(30) Priorität : **12.03.88 DE 3808274**

(43) Veröffentlichungstag der Anmeldung : **11.10.89 Patentblatt 89/41**

(45) Bekanntmachung des Hinweises auf die Patenterteilung : **03.06.92 Patentblatt 92/23**

(84) Benannte Vertragsstaaten : **DE FR GB IT NL**

(56) Entgegenhaltungen :
**EP-A- 0 146 880**
**EP-A- 0 152 217**
**DE-B- 2 009 494**
**DE-B- 2 123 175**
**GB-A- 1 265 107**
**US-A- 2 731 445**

(56) Entgegenhaltungen :
**US-A- 3 391 111**
**CHEMICAL ABSTRACTS, Band 82, Nr. 24, 16.6.1975, Zusammenfassung Nr. 163081j, Columbus, Ohio, USA; & JP-A-74 130 373**

(73) Patentinhaber : **BAYER AG**
**W-5090 Leverkusen 1 Bayerwerk (DE)**

(72) Erfinder : **Müller, Hanns Peter, Dr.**
**Weizenfeld 36**
**W-5060 Bergisch Gladbach 2 (DE)**
Erfinder : **Jansen, Bernhard, Dr.**
**Roggendorfstrasse 65**
**W-5000 Köln 80 (DE)**
Erfinder : **Calaminus, Wolfgang, Dr.**
**Lisztstrasse 1**
**W-5300 Bonn 1 (DE)**
Erfinder : **Dhein, Rolf, Dr.**
**Deswatinesstrasse 30**
**W-4150 Krefeld 1 (DE)**

EP 0 336 108 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue, flüssig-kristalline Bis-chlorkohlensäureester von 4-Hydroxyphenyl-estern von 4-Hydroxibenzoesäuren, ihre Herstellung und die aus ihnen hergestellten flüssig-kristallinen N-Alkyl-Polyurethane.

Bischlorkohlensäureester sind bereits von den verschiedensten Bishydroxyverbindungen, z.B. vom 2,2-Bis-(4-hydroxyphenyl)-propan, 1,1-Bis-(4-hydroxyphenyl)-cyclohexan, Bis-(4-hydroxyphenyl)-sulfid und von Hexahydrofuro(3,2-b)furan-3,6-diolen bekannt (siehe z.B. Makromol. Chem. 57 1-11, 1962 u. EP-B-0 025 937).

Es wurde nun gefunden, daß die Bischlorkohlensäureester, die sich von 4-Hydroxyphenyl-estern der 4-Hydroxybenzoesäuren ableiten, besonders vorteilhafte Eigenschaften aufweisen. Es wurde gefunden, daß diese Bischlorkohlensäureester bereits als solche flüssig-kristallin sind und daß sie diese Eigenschaft auch auf die aus ihnen durch Umsetzung mit disekundären Diaminen oder Dihydroxyverbindungen erhältlichen N-Alkyl-Polyurethane übertragen.

Diese mit Hilfe der Bischlorkohlensäureester der 4-Hydroxybenzoesäure-(4′-hydroxyphenyl)-ester erhältlichen N-Alkyl-Polyurethane weisen nicht nur die Vorteile der N-Alkyl-Polyurethane, wie hohe Wärmebeständigkeit auf, sondern dank ihrer LC-Eigenschaften zusätzlich ein verbessertes Fließverhalten in der Schmelze und damit eine verbesserte Verarbeitbarkeit, insbesondere zu dünnwandigen Formteilen, eine erhöhte Wärmeformbeständigkeit und einen erhöhten Elastizitätsmodul, ferner eine ausgezeichnete Chemikalienresistenz, eine hohe Flammwidrigkeit und eine gute Füllstoffverträglichkeit.

Diese vorstehend für die aus den Bischlorkohlensäureestern der 4-Hydroxybenzoesäure-(4′-hydroxyphenyl)-ester erhältlichen N-Alkyl-Polyurethane beschriebenen Eigenschaftsbilder sind von großem praktischen Interesse für Polyurethane, die für mechanisch und thermisch hoch beanspruchte Formteile verwendet werden sollen. Mit Hilfe der aus den besagten Chlorkohlensäureestern erhältlichen Polyurethane werden Polymere zugänglich, die eine Verwendung in Bereichen gestatten, in denen bislang eine Nutzung von Kunststoffen undenkbar war.

Die Erfindung betrifft daher Bischlorkohlensäureester von 4-Hydroxybenzoesäure-(4′-hydroxyphenyl)-estern der Formel

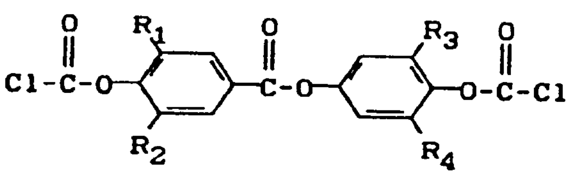

(I),

in der
$R_1$, $R_2$, $R_3$ und $R_4$ unabhängig voneinander für Wasserstoff, ein Halogenatom, vorzugsweise ein Chlor- oder Bromatom, oder eine $C_1$-$C_6$-Alkyl-, vorzugsweise eine $C_1$-$C_4$-Alkylgruppe stehen.

Die Erfindung betrifft ferner ein Verfahren zur Herstellung der Bischlorkohlensäureester der Formel (I). das dadurch gekennzeichnet ist, daß man 4-Hydroxybenzoesäure-(4′-hydroxyphenyl)-ester der formel

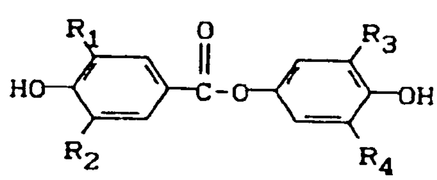

(II),

in der
$R_1$, $R_2$, $R_3$ und $R_4$ die unter Formel (I) angegebene Bedeutung haben,
in Gegenwart von säurebindenden Mitteln mit Phosgen, in für die Umsetzung von Phosgen mit Phenolen an sich bekannter Weise, umsetzt.

Die Umsetzung kann in unter den Reaktionsbedingungen inerten, mit Wasser nicht mischbaren organischen Lösungsmitteln wie Toluol oder Methylenchlorid, unter Verwendung in diesen Lösungsmitteln löslicher Säurebindemittel, z.B. organischen Basen wie Dimethylanilin, oder unter Verwendung von in diesen Lösungsmitteln unlöslichen oder mit diesen Lösungsmitteln nicht mischbaren Säurebindemitteln, wie $NaHCO_3$ oder wäßriger Natronlauge, vorgenommen werden. Überraschenderweise erhält man bei der Umsetzung der 4-Hydroxybenzoesäure-(4′-hydroxyphenyl)-ester der Formel (II) mit Phosgen, obwohl diese Ester nicht flüssig-kristallin sind, Bischlorkohlensäureester mit LC-Eigenschaften.

Die als Ausgangsverbindung für die Herstellung der erfindungsgemäßen Bischlorkohlensäureester der formel (I) benötigten 4-Hydroxybenzoesäure-(4′-hydroxyphenyl)-ester der Formel (II) und deren Herstellung sind in der DE-OS 3 622 611 beschrieben oder sind nach dem in dieser Veröffentlichtung beschriebenen Verfahren erhältlich.

Die Erfindung betrifft ferner die Polyurethane, die bei der Umsetzung der flüssig-kristallinen Bischlorkohlensäureester der Formel (I) mit disekundären Diaminen der Formel

HX-A-XH (III)

enthalten werden, in der

X für eine -N(R)-Gruppe steht,

in der

R eine $C_1$-$C_4$-Alkylgruppe, vorzugsweise eine Methylgruppe ist, oder zusammen mit dem R der zweiten -N(R)-Gruppe einen gegebenenfalls durch eine $C_1$-$C_4$-Alkylgruppe substituierten Ethylenrest bildet, und

A einen, gegebenenfalls durch Sauerstoff- und/oder Silizium-Atome und/oder eine N($C_1$-$C_4$-Alkyl)-Gruppe unterbrochenen zweiwertigen Rest eines aliphatischen Kohlenwasserstoffs, vorzugsweise eines α,ω-Alkylenrestes, oder der zweiwertige Rest eines aromatischen Kohlenwasserstoffs ist, mit der Maßgabe, daß A im Mittel ein Molekulargewicht $\overline{M}$ aufweist, das <600 ist und vorzugsweise im Bereich von 28 bis 600 liegt.

Die erfindungsgemäßen Polyurethane sind durch Struktureinheiten der Formel

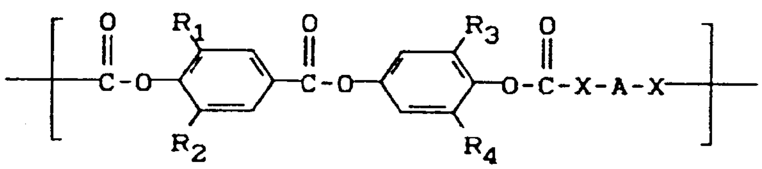 (IV),

gekennzeichnet,

in der

$R_1$, $R_2$, $R_3$ und $R_4$ die unter Formel (I) und

X und A die unter Formel (III) angegebene Bedeutung haben.

Wesentlich für die LC-Eigenschaften der durch die Struktureinheiten der Formel (IV) gekennzeichneten Polyurethane ist, daß der Gewichtsanteil der Struktureinheiten

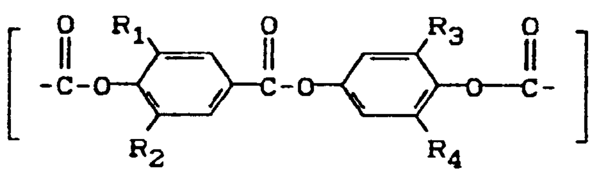

am Gesamtgewicht der Polymere 25 bis 90 Gew.-%, vorzugsweise 30 bis 85 Gew.-%, beträgt. Für das Erreichen möglichst hoher Molekulargewichte ist es vorteilhaft, die erfindungsgemäßen Chlorkohlensäureester der Formel (I) und die Diamine der Formel (III) in einem Molverhältnis von etwa 1:1 einzusetzen.

Die Umsetzung der erfindungsgemäßen Bischlorkohlensäureester der Formel (I) mit den Diaminen der Formel (III) wird vorzugsweise in einem unter den Reaktionsbedingungen inerten, mit Wasser nicht mischbaren organischen Lösungsmittel in Gegenwart von Säurebindemitteln bei Temperaturen von -10 bis +20° C durchgeführt.

Als Säurebindemittel kommen anorganische Basen wie $NaHCO_3$, organische Basen wie Triethylamin und auch Gemische von anorganischen und organischen Basen in Betracht. Als unter den Reaktionsbedingungen inerte organische Lösungsmittel seien vor allem aliphatische Chlorkohlenwasserstoffe wie Methylenchlorid und Ethylenchlorid genannt.

Vorzugsweise wird in dem 2-Phasen-System Methylenchlorid/Wasser gearbeitet.

Nach dem Aufarbeiten der Reaktionsmischungen durch Abtrennen der organischen Phase, Entfernen der in der organischen Phase befindlichen monomolekularen Verbindungen durch Auswaschen mit Wasser, Trocknen und Entfernen des Lösungsmittels wird das Polymer in Form eines durchsichtigen Feststoffs mit Kunststoffeigenschaften erhalten.

Für A seien als zweiwertige Reste aliphatischer Kohlenwasserstoffe, deren C-Kette gegebenenfalls durch

Sauerstoff- und/oder Siliziumatome und/oder durch -N(Alkyl)-Gruppen unterbrochen sein kann, beispielsweise genannt: $C_2$-$C_4$-Alkylenreste, wie der Ethylen-, Propylen-1,3- und der Butylen-1,4-Rest; die Reste von Alkylen =polyaminen der Formel

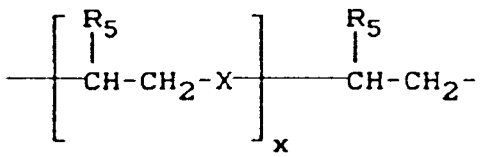

(V),

in der
$R_5$ Wasserstoff oder Methyl ist,
X die unter Formel (III) angegebene Bedeutung hat und
x für eine ganze Zahl von 10 bis 40 steht;
und Reste von Polysiloxanen der Formel

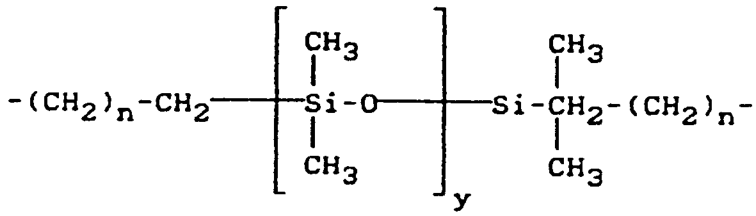

(VI),

in der
n für 0 oder 1 steht und
y, wenn n = 0 ist, eine ganze Zahl von 5 bis 25 und wenn n = 1 ist, eine ganze Zahl von 10 bis 40 bedeutet.

Aus der Forderung, das A im Mittel ein Molekulargewicht $\overline{M}$ aufweisen soll, das <600 ist und vorzugsweise im Bereich von 28 bis 600 liegt, folgt, daß sich von Resten hochmolekularer Alkylen =polyamine der Formeln (V) und (VI) ableitende disekundäre Diamine der Formel (III) nur im Gemisch mit niedermolekularen disekundären Diaminen der Formel (III) eingesetzt werden können und daß der Anteil der hochmolekularen Verbindungen der Formel (III) in diesem Gemisch so bemessen ist, daß das Molekulargewicht von A im Mittel im Bereich von 28 bis 600 liegt.

Für A seien als zweiwertige Reste aromatischer Kohlenwasserstoffe beispielsweise genannt:
Der Phenylen-1,4- und der Naphthylen-1,5-Rest; ferner Reste, in denen 2 oder mehrere Phenylen-Gruppen in 1,4-Stellung über Sauerstoff, Schwefel, eine Sulfon-, eine Carbonyloxy- oder eine Alkylengruppe miteinander verknüpft sind. Beispiele für solche Reste sind

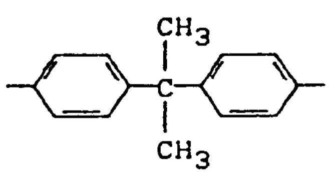 ; 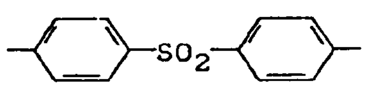 ;

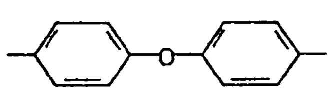 ; 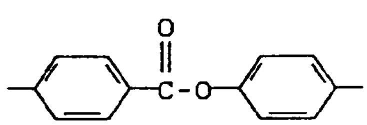 ;

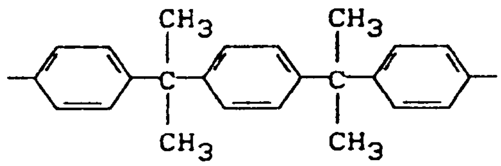 ; 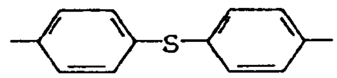 .

Als Vertreter für die Verbindungen der Formel (III) seien beispielsweise genannt:
Ethylendiamin, Propylendiamin, Piperazin, 2,5-Dimethylpiperazin, N,N′-Dimethylethylendiamin, N,N′,N″-Trimethyl-diethylentriamin und N,N′-Dimethyl-1,5-diaminonaphthalin.

Beispiel 1

In die Suspension von 100 g 4-Hydroxybenzoesäure-(4′-hydroxyphenyl)-ester in 500 ml Toluol werden bei 0° C langsam 150 g Phosgen eingeleitet. Das Reaktionsgemisch wird auf -5° C abgekühlt und bei dieser Temperatur tropfenweise mit 121 g Dimethylanilin versetzt. Nach 30-minütigem Nachreagieren läßt man das Reaktionsgemisch auf Raumtemperatur kommen und rührt noch 3 Stunden bei dieser Temperatur nach. Nach dem Ausblasen des überschüssigen Phosgens mittels Stickstoff wird die Reaktionslösung zunächst mit 10 %iger Salzsäure, anschließend mehrmals mit destilliertem Wasser gewaschen. Die Lösung wird getrocknet und vom Lösungsmittel befreit. Der zurückbleibende Feststoff wird durch Umkristallisieren aus Cyclohexan gereinigt.

Es werden 118,6 g (= 76,8 % der Theorie) Bischlorkohlensäureester in Form farbloser Kristalle erhalten.
Fp.: 125-128° C
Klärpunkt: 120° C monotrop flüssig-kristallin

Beispiel 2

8,27 g des gemäß Beispiel 1 erhaltenen Bischlorkohlensäureesters werden in 250 ml Methylenchlorid gelöst. Die Lösung wird auf 0° C vorgekühlt und unter intensivem Rühren zu einer ebenfalls auf 0° C gekühlten Lösung von 4,8 g Piperazinhexahydrat, 3,11 g $NaHCO_3$ und 2 g Triethylamin in 250 ml Wasser gegeben. Das Reaktionsgemisch wird noch 1 Stunde bei 0° C gerührt. Anschließend wird die organische Phase abgetrennt, mit Wasser neutral gewaschen, getrocknet und abschließend vom Lösungsmittel befreit. Der flüssige Rückstand wird auf ein Aluminiumblech gegossen und bildet dort, nach dem Abdampfen der letzten Lösungsmittelreste einen festen, leicht trüben Film mit Kunststoffeigenschaften. Die Untersuchung des Films unter dem Polarisationsmikroskop zeigt, daß er im Temperaturbereich 256-300° C flüssig-kristalline Eigenschaften aufweist. Der Staudinger-Index beträgt 144,5 $cm^3/g$; die gelchromatographische Molekulargewichtsbestimmung ergab ein Molekulargewicht von 60 000.

Beispiel 3

Es wird wie in Beispiel 2 beschrieben verfahren, nur wird anstelle der 4,8 g Piperazinhexahydrat ein Gemisch aus 4,55 g Piperazinhexahydrat und 1,8 g eines α,ω-Bis-methylamino-polysiloxans der Formel

$$CH_3NH\text{-}(CH_2)_2\text{-}O\text{-}[Si(CH_3)_2\text{-}O\text{-}]_{29,5}\text{-}(CH_2)_2\text{-}NHCH_3$$

verwendet.

Es wird ein leicht trüber, sehr flexibler Kunststoff-Film erhalten.

Die Untersuchung des Films unter dem Polarisationsmikroskop zeigt, daß er im Bereich von 250 bis 300° C flüssig-kristalline Eigenschaften aufweist. Der Staudinger-Index beträgt 138,5 $cm^3/g$, das gelchromatographisch bestimmte Molekulargewicht 84 000.

Beispiel 4

Unter den in Beispiel 2 beschriebenen Bedingungen werden 8,27 g des gemäß Beispiel 1 erhaltenen Bischlorkohlensäureesters mit 4,55 g Piperazinhexahydrat und 3,13 g eines α,ω-Bis-(methylamino)-polypropylenglykols unter Verwendung von 4 g $NaHCO_3$ und 2 g Triethylamin umgesetzt.

Es wird ein fester, sehr flexibler und elastischer Kunststoff-Film erhalten.

Die polarisationsmikroskopische Untersuchung ergibt einen Schmelzpunkt von 160° C und flüssig-kristalline Eigenschaften im Temperaturbereich von 210-335° C.

**Patentansprüche**

1. Bischlorkohlensäureester der 4-Hydroxybenzoesäure-(4'-hydroxyphenyl)-ester der Formel

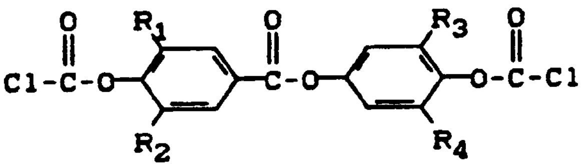 (I),

in der
$R_1$, $R_2$, $R_3$ und $R_4$ unabhängig voneinander für Wasserstoff, ein Halogenatom oder eine $C_1$-$C_6$-Alkylgruppe stehen.

2. Verfahren zur Herstellung der Bischlorkohlensäureester der Formel

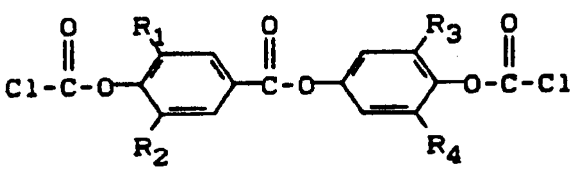 (I),

in der
$R_1$, $R_2$, $R_3$ und $R_4$ unabhängig voneinander für Wasserstoff, ein Halogenatom oder eine $C_1$-$C_6$- Alkylgruppe stehen,
dadurch geennzeichnet, daß man 4-Hydroxybenzoesäure-(4'-hydroxyphenyl)-ester der Formel

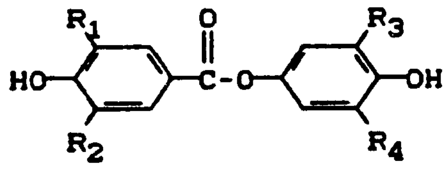 (II),

in der
$R_1$, $R_2$, $R_3$ und $R_4$ die unter Formel (I) angegebene Bedeutung haben,
in Gegenwart von säurebindenden Mitteln mit Phosgen, in für die Umsetzung von Phosgen mit Phenolen an sich bekannter Weise, umsetzt.

3. Polyurethane, gekennzeichnet durch Struktureinheiten der Formel (IV)

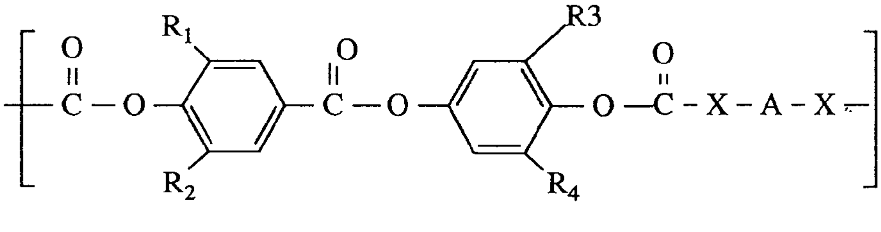 (IV)

in der
$R_1$, $R_2$, $R_3$ und $R_4$ unabhängig voneinander für Wasserstoff, ein Halogenatom oder eine $C_1$-$C_6$-Alkylgruppe stehen, X für eine -N(R)-Gruppe steht, in der

R eine $C_1$-$C_4$-Alkylgruppe ist, oder zusammen mit dem R der zweiten -N(R)-Gruppe einen gegebenenfalls durch eine $C_1$-$C_4$-Alkylgruppe substituierten Ethylenrest bildet, und
A einen, gegebenenfalls durch Sauerstoff- und/oder Silizium-Atome und/oder eine N($C_1$-$C_4$-Alkyl)-Gruppe unterbrochen zweiwertigen Rest eines aliphatischen Kohlenwasserstoffs oder der zweiwertige Rest eines aromatischen Kohlenwasserstoffs ist, mit der Maßgabe, daß A im Mittel ein Molekulargewicht $\overline{M}$ aufweist, das < 600 ist.

4.Polyurethane gemäß Anspruch 3, dadurch gekennzeichnet, daß sie durch Umsetzung von Bischlorkohlensäureestem der 4-Hydroxybenzoesäure-(4'-hydroxyphenyl)-ester der Formel

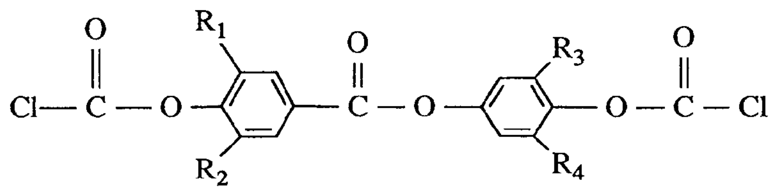

(I),

in der
$R_1$, $R_2$, $R_3$ und $R_4$ die in Anspruch 3 angegebene Bedeutung haben, mit disenkundären Diaminen der Formel

HX-A-XH (III)

erhalten werden, in der auch X und -A- die in Anspruch 3 angegebene Bedeutung haben.

5. Polyurethane gemäß Anspruch 3 mit einem Molekulargewicht (Gewichtsmittel, ermittelt durch Gelchromatographie) von 60.000 bis 84.000.

## Claims

1. Bis-chlorocarbonic acid esters of 4-hydroxybenzoic acid-(4'-hydroxyphenyl)-esters corresponding to the following formula

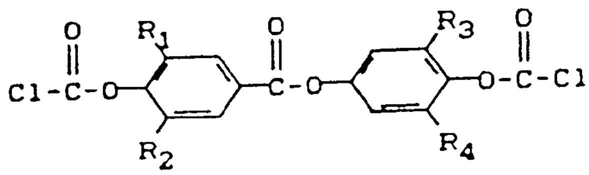

(I),

in which
$R_1$, $R_2$, $R_3$ and $R_4$ independently of one another represent hydrogen, a halogen atom or a $C_{1-6}$ alkyl group.

2. A process for the production of bis-chlorocarbonic acid esters corresponding to the formula

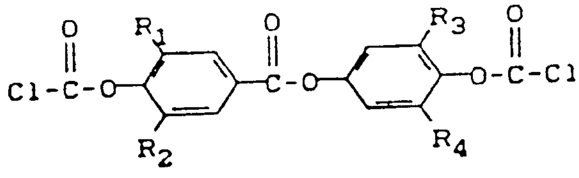

(I),

in which
$R_1$, $R_2$, $R_3$ and $R_4$ independently of one another represent hydrogen, a halogen atom or a $C_{1-6}$6 alkyl group, characterized in that 4-hydroxybenzoic acid-(4'-hydroxyphenyl)-esters corresponding to the following formula

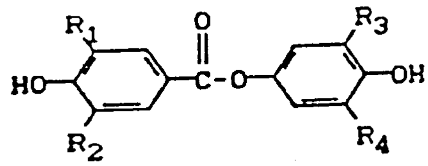

(II),

in which

$R_1$, $R_2$, $R_3$ and $R_4$ are as defined for formula (I), are reacted with phosgene in the presence of acid-binding agents by methods known per se for the reaction of phosgene with phenols.

3. Polyurethanes, characterized by structural units corresponding to formula (IV)

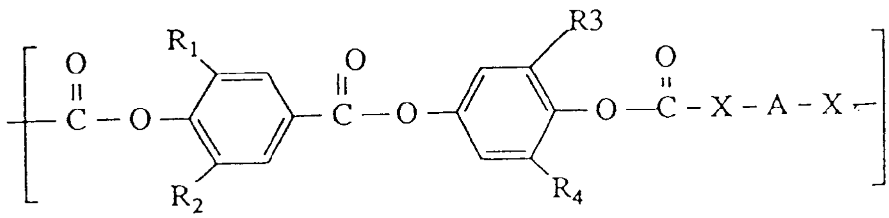

(IV)

in which

$R_1$, $R_2$, $R_3$ and $R_4$ independently of one another represent hydrogen, a halogen atom or a $C_{1-6}$ alkyl group, X is an -N(R)-group where

R is a $C_{1-4}$ alkyl group or, together with the second -N(R) group, forms an ethylene group optionally substituted by a $C_{1-4}$ alkyl group and

A is a difunctional residue of an aliphatic hydrocarbon optionally interrupted by oxygen and/or silicon atoms and/or an N($C_{1-4}$ alkyl) group or the difunctional residue of an aromatic hydrocarbon, with the proviso that A has an average molecular weight M of < 600.

4. Polyurethanes as claimed in claim 3, characterized in that they are obtained by reaction of bischlorocarbonic acid esters of 4-hydroxybenzoic acid-(4′-hydroxyphenyl)-ester corresponding to the following formula

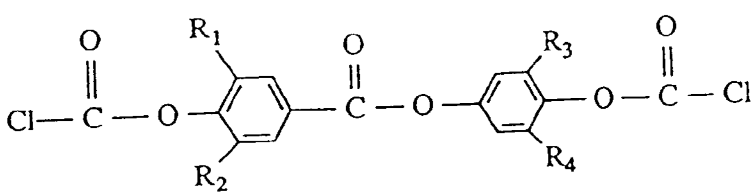

(I),

in which

$R_1$, $R_2$, $R_3$ and $R_4$ are as defined in claim 3, with disecondary diamines corresponding to the following formula

HX-A-XH (III)

in which X and -A- are as defined in claim 3.

5. Polyurethanes as claimed in claim 3 having a molecular weight (weight average, as determined by gel chromatography) of 60,000 to 84,000.

## Revendications

1. Esters d'acide bischlorocarbonique des esters de 4′-hydroxyphényle d'acide 4-hydroxybenzoïque de formule

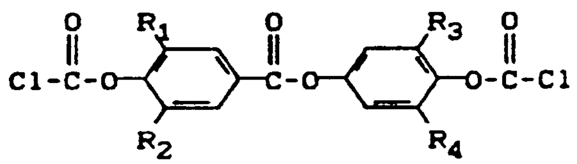

(I),

dans laquelle
$R_1$, $R_2$, $R_3$ et $R_4$ représentent indépendamment les uns des autres l'hydrogène, un atome d'halogène ou un groupe alkyle en $C_1$ à $C_6$.

2. Procédé de production des esters d'acide bischlorocarbonique de formule

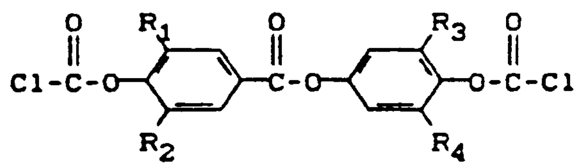

(I),

dans laquelle
$R_1$, $R_2$, $R_3$ et $R_4$ représentent indépendamment les uns des autres l'hydrogène, un atome d'halogène ou un groupe alkyle en $C_1$ à $C_6$,
caractérisé en ce qu'on fait réagir des esters de 4'-hydroxyphényle d'acide 4-hydroxybenzoïque de formule

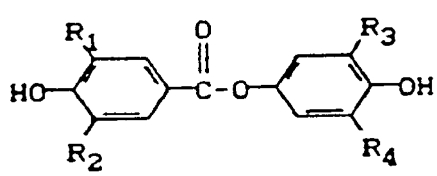

(II),

dans laquelle
$R_1$, $R_2$, $R_3$ et $R_4$ ont la définition indiquée pour la formule (I)
en présence d'accepteurs d'acides avec le phosgène, d'une manière connue pour la réaction de phosgène avec des phénols.

3. Polyuréthannes, caractérisés par des motifs structuraux de formule (IV)

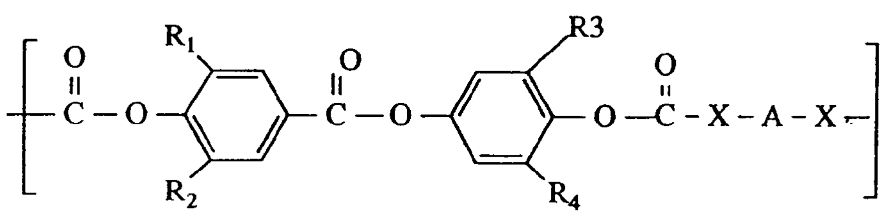

(IV)

dans laquelle
$R_1$, $R_2$, $R_3$ et $R_4$ représentent indépendamment les uns des autres l'hydrogène, un atome d'halogène ou un groupe alkyle en $C_1$ à $C_6$, X est un groupe -N(R) dans lequel
R est un groupe alkyle en $C_1$ à $C_4$, ou forme conjointement avec R du second groupe -N(R) un reste éthylène éventuellement substitué par un groupe alkyle en $C_1$ à $C_4$, et
A représente un reste divalent d'un hydrocarbure aliphatique, éventuellement interrompu par des atomes d'oxygène et/ou de silicium et/ou par un groupe N-(alkyle en $C_1$ à $C_4$) ou le reste divalent d'un hydrocarbure aromatique, sous réserve que A ait en moyenne un poids moléculaire moyen $\overline{M}$ inférieur à 600.

4. Polyuréthannes suivant la revendication 3, caractérisés en ce qu'ils sont obtenus par réaction d'esters d'acide bischlorocarbonique des esters 4'-hydroxyphényliques d'acide 4-hydroxybenzoïque de formule

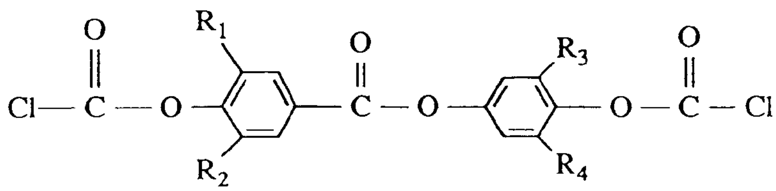 (I),

dans laquelle

$R_1$, $R_2$, $R_3$ et $R_4$ ont la définition indiquée dans la revendication 3, avec des diamines disecondaires de formule

HX-A-XH (III)

dans laquelle également X et -A- ont la définition indiquée dans la revendication 3.

5. Polyuréthannes suivant la revendication 3, ayant un poids moléculaire (moyenne pondérale déterminée par chromatographie sur gel) de 60 000 à 84 000.